# EUROPÄISCHE PATENTSCHRIFT

(11) **EP 0 869 882 B1**
(45) Veröffentlichungstag und Bekanntmachung des Hinweises auf die Patenterteilung: **30.10.2002**
(21) Anmeldenummer: 97920544.0
(22) Anmeldetag: 25.03.1997
(51) Int. Cl.: B60R 16/02, H02J 7/14

(54) **VORRICHTUNG ZUR SPANNUNGSVERSORGUNG IN EINEM KRAFTFAHRZEUG**
DEVICE FOR SUPPLYING POWER IN A MOTOR VEHICLE
DISPOSITIF D'ALIMENTATION EN COURANT POUR UN VEHICULE AUTOMOBILE

(30) Priorität: 15.07.1996 DE 19628223
(43) Veröffentlichungstag der Anmeldung: 14.10.1998
(73) Patentinhaber: ROBERT BOSCH GMBH, 70442 Stuttgart (DE)
(72) Erfinder: SCHENK, Joachim, D-71282 Hemmingen (DE); SCHRAMM, Dieter, D-70469 Stuttgart (DE); SCHÖTTLE, Richard, D-75417 Mühlacker (DE)
(86) Internationale Anmeldenummer: DE9700605
(87) Internationale Veröffentlichungsnummer: WO98002333

(56) Entgegenhaltungen:
- DE-C- 4 138 943
- US-A- 5 321 231

## Beschreibung

Die Erfindung geht aus von einer Spannungsversorgung in einem Kraftfahrzeug nach der Gattung des Anspruchs 1.

### Stand der Technik

Die Spannungsversorgung in Kraftfahrzeugen wurde bisher üblicherweise mit Hilfe einer einzigen, von einem Generator aufgeladenen Batterie durchgeführt. In modernen Kraftfahrzeugen mit einer Vielzahl von elektrischen Verbrauchern reicht eine Batterie zur Spannungsversorgung teilweise nicht mehr aus, so daß zwei getrennte Batterien verwendet werden, die üblicherweise zueinander parallel geschaltet sind. Damit sich die beiden Batterien nicht gegenseitig negativ beeinflussen und damit Spannungseinbrüche, die während der Betätigung des Starters auftreten können, vom üblichen Bordnetz ferngehalten werden können, wird bei einer aus der DE-PS 41 38 943 bekannten Vorrichtung zur Spannungsversorgung in einem Kraftfahrzeug mit zwei Batterien ein Lade-/Trennmodul zwischen die beiden Batterien geschaltet, das während des Startvorgangs die dem Starter zugeordnete Batterie vom übrigen Bordnetz abtrennt. Da die Nennspannung der dem Starter zugeordneten Batterie etwas geringer ist als die Nennspannung der Bordnetzbatterie wird sichergestellt, daß die Starterbatterie stets optimal geladen ist. In einer Ausgestaltung der bekannten Vorrichtung zur Spannungsversorgung in einem Kraftfahrzeug wird vorgeschlagen, zusätzlich einen Spannungswandler einzusetzen, beispielsweise einen Hochsetzsteller. Damit ist es möglich, als Starterbatterie eine Batterie einzusetzen, deren Nennspannung höher ist als die der Bordnetzbatterie. Die für die Ladung der Starterbatterie benötigte Ladespannung kann durch eine Spannungserhöhung aus der Bordnetzspannung gewonnen werden.

### Vorteile der Erfindung

Die erfindungsgemäße Spannungsversorgung in einem Kraftfahrzeug mit den kennzeichnenden Merkmalen des Hauptanspruchs hat den Vorteil, daß eine besonders leistungsstarke und dennoch zuverlässige und sichere Spannungsversorgung für die Verbraucher eines Fahrzeugbordnetzes ermöglicht wird. Erzielt wird dieser Vorteil, indem wenigstens ein Generator so betrieben wird, daß er eine drehzahlabhängige Ausgangsspannung liefert. Diese drehzahlabhängige Ausgangsspannung wird mit Hilfe einer Leistungselektronik an die Bordnetzerfordernisse angepaßt, wobei diese Anpassung so optimiert werden kann, daß die zu versorgenden Komponenten jeweils mit der für sie optimal angepaßten Spannung versorgt werden können. Über die Leistungselektronik läßt sich eine optimale Leistungsanpassung hinsichtlich einer maximalen Energieausbeute beim Generator durch Impedanzanpassung erzielen.

Weitere Vorteile der Erfindung werden durch die in den Unteransprüchen angegebenen Maßnahmen erzielt. Eine dieser vorteilhaften Maßnahmen besteht darin, die Anzahl der aktiven Generatorwindungen durch Wicklungsumschaltung zu verändern und damit eine zusätzliche Generatoranpassung zu erzielen. Bei einem Zweibatterienbordnetz mit Zwischenkreis und Versorgungskreis, die jeweils auf demselben Spannungsniveau liegen, können die Spannungen in vorteilhafter Weise im Leistungssteuergerät ohne Wandlung direkt, also ohne Verluste den Verbrauchern zur Verfügung gestellt werden, womit sich eine wirkungsgradoptimierte Verteilung erzielen läßt. Eine verbraucher- und batterie- bzw. speicherspezifische Spannungsversorgung läßt sich in vorteilhafter Weise zur Realisierung neuer Funktionen einsetzen. Es ist damit eine Steigerung des Systemwirkungsgrades und eine Verbesserung bestehender Funktionen möglich. Zur Sicherung der Ladebilanz bzw. der Spannungsversorgung der wichtigsten Verbraucher, also der Verbraucher, die für einen sicheren Start und einen Betrieb des Fahrzeuges unbedingt erforderlich sind, kann je nach Ladezustand der Speicher und der Leistungsanforderung der Verbraucher sowie gemäß den vorliegenden Betriebspunkten der Generatoren über ein Bordnetzmanagement eine vorteilhafte stromkreisabhängige Leistungsbereitstellung direkt im Leistungssteuergerät und/oder in der Karosserie-Leistungs-Elektronik an die Verbraucher erfolgen. Im Fehlerfall kann das Bordnetzmanagement in vorteilhafter Weise über eine integrierte Diagnose einen Ersatzbetrieb ermöglichen und die Wartung und Fehlersuche rationalisieren.

Es ist weiterhin vorteilhaft, daß für die Verteilung der elektrischen Energien, Spannungswandlung für kleine Leistungen, Versorgungsumschaltung von Komponenten und die verbrauchernahe Anordnung der Leistungsendstufen im Bordnetz sogenannte Karosserie-Leistungs-Elektronikeinheiten (KLE) eingesetzt werden, die zu einer Vereinfachung der Verkabelung führen. Zu einer vorteilhaften Ausgestaltung können die Karrosserie-Leistungs-Elektronikeinheiten auch zu einer Einheit zusammengefaßt werden.

Eine garantierte Startsicherheit wird erzielt, indem eine der Batterien als Starterbatterie ausgebildet wird und durch das Bordnetzmanagement eine Ladung dieser Batterie mit höchster Priorität garantiert wird. Falls die zur Versorgung der Bordnetzverbraucher dienende Versorgungsbatterie zu tief entladen ist, muß die Starterbatterie während des Starts und in einer sich daran anschließenden Notlaufphase die Energie für sämtliche startrelevanten Komponenten zur Verfügung stellen. Der Anschluß erfolgt mit Hilfe einer Karosserie-Leistungs-Elektronikeinheit (KLE), die mit doppelter Versorgung ausgerüstet ist.

### Zeichnung

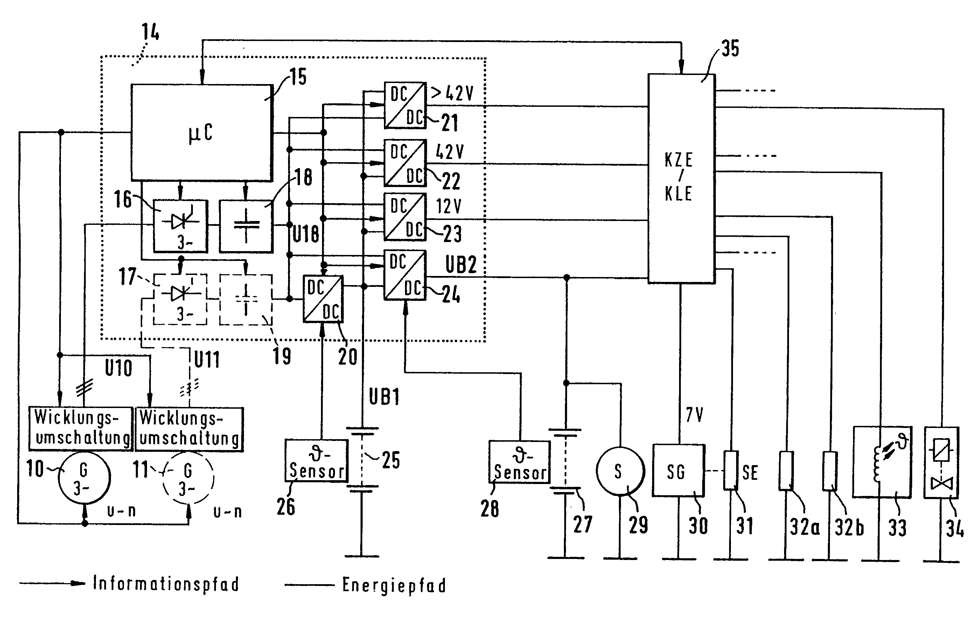

Ein Ausführungsbeispiel der Erfindung ist in der einzigen Figur dargestellt und wird in der nachfolgenden Beschreibung näher erläutert.

### Beschreibung

In der Figur sind die für das Verständnis der Erfindung erforderlichen Bestandteile eines Fahrzeugbordnetzes einschließlich des erfindungsgemäßen Bordnetzsteuergerätes dargestellt. Diese Bestandteile umfassen im einzelnen: Zwei Drehstromgeneratoren 10, 11, denen jeweils Wicklungsumschaltungen 12, 13 zugeordnet sind, deren Aufgabe bzw. Funktionsweise noch näher erläutert wird. Die Drehstromgeneratoren sind direkt mit dem Leistungssteuergerät 14 verbunden. Ein Spannungsregler kann für die Generatoren 10 und 11 zusätzlich vorgesehen werden, wobei die beiden Generatoren 10, 11 auch ungeregelte, drehzahlabhängige bzw. drehzahlunabhängige Ausgangsspannungen U10, U11 liefern können. Da es sich bei den besagten Generatoren um Drehstromgeneratoren handelt, sind beide Generatoren über je drei Leitungen mit dem Leistungssteuergerät verbunden. Das Leistungssteuergerät 14 umfaßt ein als Bordnetzmanagement und Diagnose bezeichnete Baugruppe, beispielsweise einem Mikroprozessor, der den gesamten Funktionsablauf steuert, die jedoch auch teilweise oder komplett extern vorgesehen werden kann. Weiterhin umfaßt das Leistungssteuergerät 14 einen Mikroprozessor 15 für Bordnetz-Management und Diagnose, zwei gesteuerte Dreiphasenbrücken 16, 17 sowie diesen zugeordneten Speicher, z. B. Kondensatoren 18, 19. Die gesteuerten Brücken 16, 17 sind mit den je drei Anschlüssen der beiden Drehstromgeneratoren 10, 11 verbunden. Sie richten die Generatorausgangsspannungen gleich und die gleichgerichteten Spannungen werden in den Kondensatoren 18, 19 bzw. kondensatorähnlichen Speicherelementen zwischengespeichert. Die Ansteuerung der Brücken 16, 17 erfolgt durch den Mikroprozessor für Bordnetzmanagement und Diagnose. Dieser Mikroprozessor kann auch die Kondensatoren 18, 19 ansteuern bzw. ihre Kapazität verändern oder Löschvorgänge auslösen.

In dem in der Figur dargestellten Ausführungsbeispiel der Erfindung sind Ansteuerverbindungen bzw. Informationspfade jeweils durch eine dünne Linie dargestellt. Energiepfade, über die Versorgungsspannungen weitergeleitet werden, sind durch dicke Linien symbolisiert.

Neben den bereits erwähnten Bauteilen umfaßt das Bordnetzsteuergerät 14 mehrere Gleichspannungswandler. Diese DC/DC-Wandler sind mit 20, 21, 22, 23 und 24 bezeichnet. Sie stehen untereinander über die dargestellten Energie- bzw. Informationspfade in Verbindung.

Der Spannungswandler 20 erhält als Eingangsspannung die gleichgerichtete aber noch drehzahlabhängige Ausgangsspannung U18 der Kondensatoren 18 und 19. Er liefert an seinem Ausgang eine Gleichspannung, deren Höhe so gewählt wird, daß die Batterie 25, die die übliche Bordnetzbatterie bzw. Versorgungsbatterie darstellt, optimal geladen wird. Die Höhe dieser Spannung UB1 kann an die Erfordernisse angepaßt werden, dazu wird beispielsweise mit Hilfe eines Temperatursensors 26 die Temperatur der Batterie 25 gemessen und die Ausgangsspannung des Spannungswandlers 20 in Abhängigkeit von dieser Temperatur eingestellt.

Die Spannungswandler 21 bis 24 weisen zwei Energieeingänge auf, über die zum einen die drehzahlabhängige, von den Kondensatoren 18, 19 gelieferte Spannung zugeführt wird, während am anderen Energieeingang die Spannung der Versorgungsbatterie 25 zugeführt wird. Die Auswahl der Gleichspannungswandlung bzw. ihre innere Verschaltung wird so gewählt, daß am Ausgang des Spannungswandlers 21 stets eine Spannung auftritt, die größer als 42 V ist. Am Ausgang des Spannungswandlers 22 liegen 42 V, am Ausgang des Spannungswandlers 23 12 V und am Ausgang des Spannungswandler 24 liegt die Spannung UB2, deren Höhe so wählbar ist, daß eine optimale Ladung der Batterie 27, also der Starterbatterie gewährleistet ist. Dazu wird die mit einem Temperatursensor 28 gemessene Temperatur der Batterie 27, die im übrigen zur Versorgung des Starters 29 dient, mitberücksichtigt.

Die an den Ausgängen der Spannungswandler 21 bis 24 liegenden Spannungen werden über entsprechende Ausgänge aus dem Leistungssteuergerät 14 ausgekoppelt und über geeignete Leistungselektronikbauteile den verschiedenen Bordnetzverbraucher zugeführt. Die Leistungselektronikelemente sind beim Ausführungsbeispiel in einer gesamten Baugruppe (KZE mit KLEs) aufgebaut, sie könnten auch aufgeteilt sein, z. B. kann in jeder der Ausgangsleitungen der Spannungswandler 21 bis 24 eine eigene Karosserie-Leistungs-Elektronikeinheit (KLE) vorhanden sein.

Die bisher noch nicht näher bezeichneten Verbraucher des Fahrzeugbordnetzes sind Steuergeräte, deren Logik und Sensorik eine eigene Spannungsversorgung, z. B. 7 V erhält, start- und ersatzbetriebsrelevante Bauelemente 31, 12 V-Verbraucher 32, Hochleistungsverbraucher 33, die mit 42 V versorgt werden soll, dies ist beispielsweise eine Scheibenheizung und ein Ventil 35, beispielsweise Einspritzventile, die sehr hohe Dynamikanforderungen haben und mit einer Spannung von mehr als 42 V versorgt werden müssen.

Anstelle des Spannungswandlers 21, der an seinem Ausgang eine Spannung > 42 V liefert, kann auch ein Spannungswandler treten, der die an den Kondensatoren 18, 19 liegende drehzahlabhängige Spannung ohne Spannungswandlung durchschaltet, sofern diese Spannung größer ist als 42 V und die Spannung immer dann hochsetzt, wenn die an den Kondensatoren 18, 19 anliegende Spannung kleiner ist als 42 V.

Zur Verhinderung von Stromrückflüssen können an verschiedenen Stellen der einzelnen Energiepfade Dioden eingesetzt werden, dies gilt insbesonders im Eingangsbereich der Spannungswandler 21 bis 24.

Anstelle der im Ausführungsbeispiel dargestellten Doppelgeneratoren läßt sich auch ein Spannungsversorgungssystem mit einem einzigen Generator aufbauen, in diesem Fall würden die mit 11, 13, 17 und 19 bezeichneten Bauelemente entfallen. Es ist auch möglich, einen herkömmlichen Generator mit Spannungsregler mit einem Generator mit drehzahlproportionaler Spannung zu kombinieren.

Bei den Drehstromgeneratoren 10 bzw. 11 sowie den zugehörigen Wicklungsumschaltungen 12, 13 und den speziellen Reglereingriffen handelt es sich um eine spezielle Generatorausgestaltung. Drehstromgeneratoren weisen üblicherweise neben der Erregerwicklung drei Ständerwicklungen auf, deren Wicklungsanzahl letztendlich die gelieferte Ausgangsspannung bestimmt. Die beim Ausführungsbeispiel vorgeschlagenen Drehstromgeneratoren mit Wicklungsumschaltung ermöglichen es, unter bestimmten vorgebbaren Bedingungen die Zahl der tatsächlich genutzten Wicklungen durch Umschalten zu verändern. Solche Generatoren weisen Wicklungsanzapfungen auf, die umschaltbar sind, wobei die Umschaltvorgänge vom Leistungssteuergerät über entsprechende Ansteuerleitungen ausgelöst werden. Eine Wicklungsumschaltung wird wie im folgenden noch näher erläutert wird, in Abhängigkeit von der Drehzahl des Generators sowie der Lastanpassung durchgeführt. Die Drehzahl des Generators die bekanntermaßen proportional zur Drehzahl der Kurbelwelle des Fahrzeugmotors ist, ist maßgebliche Kenngröße für die vom Generator abgegebene Spannung. Zusätzlich kann die Impedanz des Generators, zur Leistungsanpassung mit der Wicklungsumschaltung stufenweise tariert werden.

Mit der in der Figur dargestellten Vorrichtung zur Spannungsversorgung in einem Kraftfahrzeug kann elektrische Energie für die verschiedensten Lasten im Kraftfahrzeug zur Verfügung gestellt werden. Es ist möglich, eine höhere mittlere Leistung zu erzeugen als bei herkömmlichen Spannungsversorgungen, die Pufferung der erhöhten Spitzenleistung sowie höhere Spannungen zur Realisierung ihrer Funktion sind darstellbar. Durch geeignete Umschaltmaßnahmen von start- und ersatzbetriebsrelevanten bzw. betriebsrelevanten Komponenten wird eine garantierte Startsicherheit erzielt, der startbedingte Spannungseinbruch kann durch Abkopplung der Verbraucher bzw. durch Ausregelung mit den DC/DC-Wandlern während des Startvorgangs vermieden werden. Es läßt sich eine optimierte Ladespannung für die Batterien erzeugen, damit sind unterschiedliche verbraucherspezifische Spannungen darstellbar und eine erweiterte Ausnutzung der Generatoren ist möglich.

Als Generator wird entweder ein Drehstromgenerator mit drehzahlproportionaler Ausgangsspannung eingesetzt oder es werden mehrere Generatoren verwendet, wobei dann z. B. einer eine drehzahlproportionale Ausgangsspannung liefert. Die Generatoren können an das Bordnetzsteuergerät 14 Gleichstrom oder Drehstrom liefern, je nach dem ob die Leistungselektronik für die Gleichrichtung, für die Wicklungsumschaltung und/oder Leistungsanpassung der Generatoren im Generator selbst oder im Leistungssteuergerät untergebracht sind. Der Generator wird weiterhin mit dem herkömmlichen Spannungsregler betrieben um einen zusätzlichen Stelleingriff im Teillastbetrieb des Generators zu haben. Wesentlich ist, daß der Generator im Vollastbetrieb den Erregerstrom nicht begrenzt, sondern die Ausgangsspannung drehzahlproportional ansteigt.

Die gegebenenfalls vorgenommenen Wicklungsumschaltungen erfolgen in groben Spannungsstufen mit dem Ziel einer maximalen und wirkungsgradoptimierten Ausnutzung der Generatoren. Diese Umschaltung erfolgt in einer Weise, bei der bei kleinen Drehzahlen die gesamte Wicklung bzw. in seriell geschaltete Wicklungen zur Spannungserzeugung ausgenutzt werden. Bei Erreichen einer vorgebbaren Drehzahlschwelle wird durch Umschalten zur Spannungserzeugung nur noch die restliche Wicklung verwendet. Mit dieser Vorgehensweise ist eine Generator- bzw. Wicklungsauslegung möglich, die beispielsweise bereits bei 2000 Umdrehungen zu einer hohen Generatorausgangsspannung führt. Nach der Wicklungsumschaltung ergibt sich bei gleicher Drehzahl eine wesentlich kleinere Generatorausgangsspannung, die mit steigender Drehzahl wieder linear ansteigt.

Beim Einsatz eines speziellen Generators könnte auch ein Umschalten der Wicklungen von Stern in Dreieckschaltung durchgeführt werden, wodurch eine gegenüber der Sternschaltung um einen Faktor √3 höhere Spannung erhalten wird. In allen Fällen wird das gesamte Bordnetzmanagement mit Hilfe des Leistungssteuergerätes 14 durchgeführt. Es wird also auch die Wicklungsumschaltung vom Bordnetzsteuergerät eingeleitet. Das Leistungssteuergerät steuert im übrigen auch die dem Generator nachgeschalteten Stelleinrichtungen für die Leistungsanpassung, also die gesteuerten Brücken 16, 17 in einer Weise, daß eine Leistungsanpassung hinsichtlich maximaler Energieausbeute beim Generator erfolgt. Die gesteuerte Impedanzanpassung ermöglicht eine maximale Ausnutzung des Generators in Form einer Leistungsanpassung. Zur Leistungsanpassung wird dem Generator über die Leistungselektronik eine Belastung vorgegeben, die den gleichen Innenwiderstand wie der Generator aufweist.

Die Speicher 18 und 19 stellen einen Spannungszwischenkreis dar. Sie bilden einen Kurzzeitspeicher mit schneller Energieaufnahme und dienen zur Zwischenspeicherung. Der Zwischenkreis ist aus Effizienzgründen direkt an die Spannungswandler des Leistungssteuergeräts angeschlossen, die zur zusätzlichen Pufferung der Versorgung noch mit der Versorgungsbatterie 25 in Verbindung stehen. Hierdurch wird eine wirkungsgradreduzierende Kaskadierung von Spannungswandlern vermieden.

Die Starterbatterie 27 und die Versorgungsbatterie 25 können mit Temperatursensoren 26, 28 versehen werden, die die gemessenen Temperaturen an das Leistungssteuergerät 14 weiterleiten. Es ist dann eine Ladung der beiden Batterien mit optimaler temperaturabhängiger Spannung möglich. Bei der Optimierung des Ladevorgangs können nach Batterienart auch weitere und/oder andere Parameter berücksichtigt werden.

Der DC/DC-Spannungswandler 21, der die Mindestspannung von 42 V aus der Versorgungsbatterie erzeugen soll, kann auch so ausgelegt werden, daß er mindestens 42 V liefert, jedoch auf eine drehzahlproportional steigende Spannung umgeschaltet und/oder überlagert wird, sofern die an den Kondensatoren 18, 19 des Zwischenkreises entstehende Spannung 42 V überschreitet. Durch diese Vorgehensweise ist es möglich, drehzahlabhängige Lasten direkt ohne zusätzliche Verluste zu versorgen.

Die Ladungsspeicher, also die Batterien sind in ihrer Spannungshöhe so auszulegen, daß der Gesamtsystemwirkungsgrad möglichst hoch ist, daß also unter anderem eine minimale Anzahl an Spannungswandlungen erforderlich ist und Hochleistungslasten direkt aus den Speichern versorgt werden können. Es ist damit möglich, die Spannungswandler auf mittlere Leistungen auszulegen und nicht auf Spitzenleistungen.

Im Bordnetz befinden sich sogenannte Bordnetzkarosserie-Leistungs-Elektronikeinheiten KLE, die für die Verteilung der Versorgung in der Nähe der Verbraucher sorgen. Sie halten aus dem Steuergerät ausgelagerte Endstufen und sind mit einem Datennetz unter anderem mit der KZE Karosserie-Zentralelektronik und dem Leistungssteuergerät verbunden. Die Karosserie-Zentralelektronik und die Karosserie-Leistungs-Elektronikeinheiten KLE können auch als gemeinsame Leistungs-Elektronikeinheit KZE/KLE ausgestaltet sein, wie es im Ausführungsbeispiel aufgezeigt wird. Die KLE können auch zusätzlich Spannungswandler enthalten, z. B. zur Wandlung auf 7 V.

Mit der in der Figur dargestellten Spannungsversorgungseinrichtung läßt sich eine weitere Funktion realisieren, die eine Sicherstellung der Versorgung von start- und ersatzbetriebsrelevanten Komponenten 30, 31 bei entladener Versorgungsspannung gewährleisten. Dazu sind die Leistungs-Elektronikeinheiten, die zur Versorgung der start- und ersatzbetriebsrelevanten Komponenten 30, 31 dienen, mit den Spannungswandlern 23 und 24 verbindbar, wobei die Auswahl der optimalen Verbindung vom Leistungssteuergerät 14 getroffen wird. Eine Alternative wäre die Versorgung und Umschaltung des Startkreises nur mit dem Leistungssteuergerät oder nur mit der KLE. Ist die Versorgungsbatterie weitgehend entladen, kann die Spannungsversorgung aus der Startbatterie erfolgen. Während des Startvorgangs selbst wird die Startbatterie 27 entweder nur für den Starter benutzt und nicht zur Versorgung verwendet, um einen Spannungseinbruch zu vermeiden oder es werden weitere interne Spannungswandler eingesetzt, die den Spannungseinbruch kompensieren. Für die 5 V-Logik und Sensorik 30 und die sicherheits- und/oder betriebsrelevanten Elemente kann eine 7 V-Spannung durch einen weiteren Wandler im KZE/KLE bereitgestellt werden.

Das Leistungssteuergerät und die Karosserie-Leistungs-Elektronikeinheiten können in beliebiger Form aufgebaut sein, beispielsweise als Logik ASIC's, Mikroprozessoren und/oder ähnlichem. Weitere Zusatzfunktionen sind möglich. Das Datennetz kann auch mit anderen Datennetzen, beispielsweise mit dem Steuergerät des Motors gekoppelt sein.

## Patentansprüche

1. Spannungsversorgung in einem Kraftfahrzeug mit wenigstens einem Generator (10, 11), der mit einem Leistungssteuergerät (14) in Verbindung steht, das eine Vielzahl von Anschlüssen aufweist, über die wenigstens zwei Batterien (25, 27) und elektrische Verbraucher (29 - 34) verbunden sind und wobei eine der Batterien (27) dem Starter (29) zugeordnet ist, **dadurch gekennzeichnet, daß** wenigstens ein Generator (10, 11) ungeregelt betrieben wird und eine drehzahlabhängige Ausgangsspannung (U10, U11) abgibt, die einer Leistungselektronik (16-24, 35) zugeführt wird und von dieser gleichgerichtet und an die Bordnetzerfordernisse angepaßt wird, wobei eine Ansteuerung der Leistungselektronik (16-24, 35) vom Leistungssteuergerät (14) so durchgeführt wird, daß zu versorgende Komponenten jeweils mit für sie optimal angepaßten Spannung versorgt werden.

2. Spannungsversorgung nach Anspruch 1, **dadurch gekennzeichnet, daß** die Leistungselektronik (16-24, 35) eine gesteuerte Gleichrichterbrücke (16, 17) pro Generator (10, 11) umfaßt und über diese mit dem Generator (10, 11) verbunden ist und einen nachgeschalteten Spannungszwischenkreis (18) umfaßt und sich die gesteuerte Gleichrichterbrücke (16, 17) und der Spannungszwischenkreis (18) im Leistungssteuergerät (14) befinden.

3. Spannungsversorgung nach Anspruch 1, **dadurch gekennzeichnet, daß** die wenigstens eine gesteuerte Gleichrichterbrücke (16, 17) pro Generator sowie der nachfolgende Spannungszwischenkreis (18) Bestandteil wenigstens eines Generators (10, 11) sind.

4. Spannungsversorgung nach einem der vorhergehenden Ansprüche, **dadurch gekennzeichnet, daß** der wenigstens eine Generator (10, 11) ein Dreiphasendrehstromgenerator ist, dessen Ständerwicklungen umschaltbar sind, wodurch sich die zur Spannungserzeugung benutzte Wicklungslänge verändert, bzw. die Spannung der Wicklungen addieren und die Wicklungsumschaltung vom Leistungssteuergerät (14) durchgeführt wird.

5. Spannungsversorgung nach Anspruch 4, **dadurch gekennzeichnet, daß** die Wicklungsumschaltung in Abhängigkeit von der Generatordrehzahl (n) bzw. der Leistungsanpassung erfolgt, wobei zwischen der Minimaldrehzahl und der Maximaldrehzahl wenigstens eine Wicklungsumschaltung bei einer vorgebbaren Drehzahl erfolgt.

6. Spannungsversorgung nach einem der vorhergehenden Ansprüche, **dadurch gekennzeichnet, daß** das Leistungssteuergerät (14) eine Anzahl von Spannungswandlern (21 - 24) umfaßt, die zueinander parallel liegen und unterschiedliche Ausgangsspannungen liefern, die über Leistungselektronikeinheiten (KZE/(KLE) weiterverteilt werden.

7. Spannungsregelung nach Anspruch 6, **dadurch gekennzeichnet, daß** wenigstens einem der Spannungswandler (24) ein weiterer Spannungswandler (20) vorgeschaltet ist, der direkt mit der Versorgungsbatterie (25) in Verbindung steht.

8. Spannungsregelung nach einem der vorhergehenden Ansprüche, **dadurch gekennzeichnet, daß** den Batterien (25, 27) Temperatursensoren (26, 28) zugeordnet sind, die mit dem Leistungssteuergerät (14) in Verbindung stehen, das die den Batterien (25, 27) zuführbare Ladespannung in Abhängigkeit von den gemessenen Temperaturen regelt.

9. Spannungsversorgung nach einem der vorhergehenden Ansprüche, **dadurch gekennzeichnet, daß** Verbraucher, die start- und/oder betriebsrelevant sind, insbesondere der Starter (29), über Umschaltmittel mit beiden Batterien (25, 27) verbindbar sind, wobei die Verbindung mit der Batterie (27), die zur Versorgung des Starters (29) dient, nur dann erfolgt, wenn die andere Batterie (25) einen schlechten Ladezustand aufweist.

10. Spannungsversorgung nach einem der vorhergehenden Ansprüche, **dadurch gekennzeichnet, daß** die Batterie (27), die dem Starter (29) zugeordnet ist, mit höchster Priorität geladen wird, wobei die erforderlichen Umschaltungen vom Leistungssteuergerät (14) ausgelöst werden.

## Claims

1. Voltage supply in a motor vehicle having at least one generator (10, 11) which is connected to a power controller (14) which has a large number of connections, via which at least two batteries (25, 27) and electrical loads (29-34) are connected, and with one of the batteries (27) being associated with the starter (29), **characterized in that** at least one generator (10, 11) is operated in an unregulated manner and emits an output voltage (U10, U11) which is dependent on the rotation speed and is supplied to power electronics (16-24, 35), by which it is rectified and it is matched to the vehicle power supply system requirements, with the power electronics (16-24, 35) being driven by the power controller (14) such that components to be supplied are each supplied with a voltage which is optimally matched for them.

2. Voltage supply according to Claim 1, **characterized in that** the power electronics (16-24, 35) have one controlled rectifier bridge (16, 17) for each generator (10, 11) via which they are connected to the generator (10, 11) and have a downstream voltage intermediate circuit (18), and the controlled rectifier bridge (16, 17) and the voltage intermediate circuit (18) are located in the power controller (14).

3. voltage supply according to Claim 1, **characterized in that** the at least one controlled rectifier bridge (16, 17) for each generator and the downstream voltage intermediate circuit (18) are components of at least one generator (10, 11).

4. Voltage supply according to one of the preceding claims, **characterized in that** the at least one generator (10, 11) is a three-phase alternator, whose stator windings are switchable, by which means the winding length which is used for voltage production is varied, and/or the voltage of windings is added, and the winding switching is carried out by the power controller (14).

5. Voltage supply according to Claim 4, **characterized in that** the winding switching is carried out as a function of the generator rotation speed (n) and/or of the power matching, with at least one winding switching being carried out at a rotation speed which can be predetermined between the minimum rotation speed and the maximum rotation speed.

6. Voltage supply according to one of the preceding claims, **characterized in that** the power controller (14) has a number of voltage converters (21 - 24) which are connected in parallel with one another and supply different output voltages, which are further distributed via power electronics units (KZE/KLE).

7. Voltage regulation according to Claim 6, **characterized in that** at least one of the voltage converters (24) is preceded by a further voltage converter (20) which is directly connected to the supply battery (25).

8. Voltage regulation according to one of the preceding claims, **characterized in that** the batteries (25, 27) have associated temperature sensors (26, 28) which are connected to the power controller (14), which regulates the charging voltage which can be supplied to the batteries (25, 27) as a function of the measured temperatures.

9. Voltage supply according to one of the preceding claims, **characterized in that** the loads which are relevant for starting and/or operation, in particular the starter (29), can be connected to both batteries (25, 27) via switching means, with the connection to the battery (27) which is used for supplying the starter (29) being made only when the other battery (25) has a poor state of charge.

10. Voltage supply according to one of the preceding claims, **characterized in that** the battery (27) which is associated with the starter (29) is charged with the highest priority, with the necessary switching operations being initiated by the power controller (14).

## Revendications

1. Alimentation en tension d'un véhicule automobile ayant au moins un générateur (10, 11) relié à un appareil de commande de puissance (14) ayant un grand nombre de branchements par lesquels au moins deux batteries (25, 27) et les consommateurs électriques (29-34) sont reliés, et dont
l'une des batteries (27) est associée au démarreur (29),
**caractérisée en ce qu'**
au moins un générateur (10, 11) fonctionne sans être régulé et fournit une tension de sortie (U10, U11) dépendant de la vitesse de rotation appliquée à une électronique de puissance (16-24, 35) qui la redresse et l'adapte aux exigences du réseau embarqué,
une commande de l'électronique de puissance (16-24, 35) étant faite par l'appareil de commande de puissance (14) pour que les composants à alimenter soient chaque fois alimentés à la tension optimale pour eux.

2. Alimentation en tension selon la revendication 1,
**caractérisée en ce que**
l'électronique de puissance (16-24, 35) comporte un pont redresseur commandé (16, 17) par générateurs (10, 11) et est reliée par ceux-ci aux générateurs (10, 11), ainsi qu'un circuit de tension intermédiaire (18) en aval, et le pont redresseur commandé (16, 17) et le circuit intermédiaire de tension (18) se trouvent dans l'appareil de commande de puissance (14).

3. Alimentation en tension selon la revendication 1,
**caractérisée en ce qu'**
au moins un pont redresseur commandé (16, 17) par générateurs ainsi que le circuit de tension intermédiaire suivant font partie d'au moins un générateur (10, 11).

4. Alimentation en tension selon l'une quelconque des revendications précédentes,
**caractérisée en ce qu'**
au moins un générateur (10, 11) est un alternateur triphasé dont les enroulements de stator peuvent être commutés pour modifier la longueur d'enroulement utilisée pour générer la tension ou additionner la tension des enroulements et commuter l'enroulement de l'appareil de commande de puissance (14).

5. Alimentation en tension selon la revendication 4,
**caractérisée en ce que**
la commutation d'enroulement se fait en fonction de la vitesse de rotation (n) du générateur ou de l'adaptation de puissance, et entre la vitesse de rotation minimale et la vitesse de rotation maximale on a au moins un circuit d'enroulement pour une vitesse de rotation prédéterminée.

6. Alimentation en tension selon l'une quelconque des revendications précédentes,
**caractérisée en ce que**
l'appareil de commande de puissance (14) comporte un nombre de convertisseurs de tension (21-24) installés en parallèle et fournissant des tensions de sortie différentes réparties ensuite par les unités électroniques de puissance (KZE/KLE).

7. Réglementation de tension selon la revendication 6,
**caractérisée en ce qu'**
au moins l'un des transformateurs de tension (24) est précédé par un autre transformateur de tension (20) relié directement à la batterie d'alimentation (25).

8. Régulation de tension selon l'une quelconque des revendications précédentes,
**caractérisée en ce que**
des capteurs de température (26, 28) sont associés aux batteries (25, 27), ces capteurs sont en relation avec l'appareil de commande de puissance (14) qui règle la tension de charge fournie aux batteries (25, 27) en fonction des températures mesurées.

9. Alimentation en tension selon l'une quelconque des revendications précédentes,
**caractérisée en ce que**
des consommateurs qui interviennent dans le démarrage et/ou le fonctionnement notamment le démarreur (29) peuvent être reliés aux deux batteries (25, 27) par des moyens de commutation, et la liaison avec la batterie (27) qui sert à l'alimentation du démarreur (29) ne se fait que si l'autre batterie (25) est dans un mauvais état de charge.

10. Alimentation en tension selon l'une quelconque des revendications précédentes,
**caractérisée en ce que**
la batterie (27) associée au démarreur (29) est chargée à la priorité la plus élevée et les commutations nécessaires sont déclenchées par l'appareil de commande de puissance (14).
